# EUROPÄISCHE PATENTSCHRIFT

(11) **EP 2 738 401 B1**
(45) Veröffentlichungstag und Bekanntmachung des Hinweises auf die Patenterteilung: **10.08.2016**
(21) Anmeldenummer: 13186898.6
(22) Anmeldetag: 01.10.2013
(51) Int. Cl.: F16B 37/08

(54) **Schnellmontageelement**
Fast mounting element
Élément de montage rapide

(30) Priorität: 29.11.2012 DE 202012104653 U
(43) Veröffentlichungstag der Anmeldung: 04.06.2014
(73) Patentinhaber: Fritz, Hubert, 87746 Erkheim (DE)
(72) Erfinder: Fritz, Hubert, 87746 Erkheim (DE)
(74) Vertreter: Charrier Rapp & Liebau

(56) Entgegenhaltungen:
- WO-A1-2011/090382
- US-A1- 2011 318 135

## Beschreibung

Die Erfindung betrifft ein Schnellmontageelement und ein Befestigungssystem mit einem derartigen Schnellmontageelement.

Herkömmlicherweise werden Bauteile, wie beispielsweise die Wandflächen von Fertigbauten, mittels aufwendiger, winkelförmiger Befestigungssysteme miteinander verbunden. Bekannte Verbindungs- bzw. Befestigungssysteme, wie beispielsweise herkömmliche, auf einer Gewindestange aufgeschraubte Muttern, weisen den Nachteil auf, dass hier stets ein Zugriff auf die Mutter oder die Gewindestange verfügbar sein muss, um die Verbindung herzustellen. Zudem benötigen bekannte Systeme neben dem hohen Aufwand für die Montage auch lange Montagezeiten, die somit den Aufbau der Fertigbauten ungünstig verlängern.

Bekannt sind sogenannte Schnellspannmuttern, die in einem Muttergehäuse Klemmbacken aufweisen. Diese werden auf Gewindestäbe aufgesteckt. Die über aufwendige Konstruktionen, wie beispielsweise Spannringe oder Spannfedern aus Stahl oder in Gummi gehaltenen Klemmbacken, werden durch den eingeführten Gewindestab gespreizt. Nach Erreichen einer Endmontageposition bewirken die Spannelemente, dass die Klemmbacken in die Gewindegänge des Gegenelementes eingreifen und dieses durch zusätzliches Eindrücken in der Position festlegen. Aufgrund der aufwendigen Mechanismen, durch die den Spannbacken die Funktionalität eines Spreizens und anschließenden Anlegens an das Gewinde vermittelt wird, ist die Herstellung derartiger Spannmuttern zeit- und kostenintensiv. Aufgrund der Mechanismen im Inneren der Schnellspannmutter erweist es sich zudem problematisch, in Notfällen oder zum schnellen Lösen der Verbindung zwischen Schnellspannmutter und beispielsweise Gewindestange, direkt auf die Spannbacken zuzugreifen, um diese beispielsweise durch spezielle Werkzeuge von einer Spannposition in eine Freigabeposition zu bewegen.

Aus der US 2011/0318135 A1 ist eine Schnellverbindung zwischen einer Schraube und einer Mutter bekannt, wobei die Mutter mehrere innerhalb eines Hohlraums frei beweglich angeordnete Eingriffselemente zum Eingriff mit dem Außengewinde der Schraube enthält.

Die Eingriffselemente können z.B. als Teil einer Tellerfeder ausgebildet sein, so dass die Mutter ohne Drehung auf die Schraube aufgesteckt werden kann.

Aufgabe der vorliegenden Erfindung ist, ein Schnellmontageelement und ein Befestigungssystem mit einem derartigen Schnellmontageelement zur Verfügung zu stellen, welche die Nachteile des Standes der Technik überwindet. Das die Aufgabe lösende Schnellmontageelement soll zudem schnell und kostengünstig herstellbar sein und einen vereinfachten Aufbau gegenüber dem Stand der Technik aufweisen.

Diese Aufgabe wird durch ein Schnellmontageelement mit den Merkmalen des Anspruchs 1 und durch ein Befestigungssystem mit den Merkmalen des Anspruchs 12 gelöst.

Zweckmäßige Weiterbildungen und vorteilhafte Ausführungsformen der Erfindung sind in den Unteransprüchen angegeben.

Das erfindungsgemäße Schnellmontageelement umfasst wenigstens zwei Klemmbacken sowie eine die Klemmbacken umschließende Hülse. In einer als vorteilhaft angesehenen Ausführungsform kann das Schnellmontageelement anstelle von zwei auch drei, vier oder mehr Klemmbacken aufweisen. Die Herstellung und der Zusammenbau des erfindungsgemäßen Schnellmontageelements kann dadurch wesentlich vereinfacht werden, dass eine die Verschwenkung der Klemmbacken zulassende Klebeverbindung von Klemmbacken und Hülse vorgesehen ist. Anstelle von aufwendigen Spannmechanismen, wie beispielsweise Spannringen aus Stahl, Federkonstruktionen und in dem Schnellmontageelement vorgesehenen Gummiteilen oder dergleichen, ist hier lediglich eine dauerelastische Klebeverbindung vorgesehen. Der Einbau des Schnellmontageelements in den zu verbindenden Bauteilen kann vollständig im Werk erfolgen, wodurch die Lage genauer festgelegt und die Präzision der Verbindung verbessert werden kann. Auf der Baustelle müssen die Teile dann nur noch zusammengesteckt werden, wodurch die Montage erheblich vereinfacht wird.

Die Klebeverbindung ist bevorzugt aus einem dauerelastischen Klebemittel wie insbesondere einem Elastomerklebstoff, einem Schmelzklebstoff, einem Basispolymerklebstoff oder einem harzbasierenden Klebstoff gebildet. Die dauerelastische Klebeverbindung schafft eine zuverlässige Verbindung zwischen Klemmbacken und Hülse und erlaubt aufgrund der Elastizität eine Bewegung der Klemmbacken, die dem Aufspreizen der Klemmbacken entspricht. Das gewählte Klebemittel weist eine Langzeitstabilität auf und ist auch in einem großen Temperaturbereich einsetzbar. Das Klebemittel ist bevorzugt UV-, Temperatur- und Chemikalienbeständig und kann über mehrere Jahre bis Jahrzehnte hinweg eine Dauerelastizität sicherstellen, was besonders bei der Wiederverwendung nach einer Montage der über das Schnellmontageelement verbundenen Bauteile von Vorteil ist.

Als vorteilhaft wird angesehen, wenn die Klebeberbindung zwischen den Klemmbacken und der Hülseninnenseite eines Hülsenmantels und/oder einem Hülsenboden der Hülse vorgesehen ist. Hierbei kann z.B. beim Zusammenbau bzw. der Montage des Schnellmontageelements zunächst das Klebemittel auf der Hülseninnenseite bzw. dem Hülsenboden angebracht und danach die Klemmbacken in das Klebemittel und die Hülse eingesetzt bzw. eingedrückt werden.

Das Klebemittel kann punktförmig, nach Art einer Linie oder flächig aufgetragen werden. Die Hülseninnenseite bzw. der Hülsenboden kann auch vollflächig oder teilflächig mit dem Klebemittel verfüllt werden, bevor ein Einsetzen der Klemmbacken erfolgt. Die Klebeverbindung kann auch derart ausgebildet sein, dass die Klemmbacken vollständig durch das Klebemittel abgedeckt sind, d.h. dass sich das Klebemittel z.B. in Form eines Kegels über die Klemmbacken nach oben hinaus erstreckt. Die Klemmbacken sind dann vollständig in das Klebemittel eingebettet, wodurch die Klemmbacken zusätzlich stabilisiert sind und das Schnellmontageelement besser gegen Feuchtigkeitseintritt und Verschmutzung geschützt ist.

Als vorteilhaft wird angesehen, wenn das Klebemittel transparent, opak oder mit einem Färbemittel, insbesondere mit Farbpigmenten versetzt, ausgebildet ist. So besteht beispielsweise die Möglichkeit, dass über eine geeignete Auswahl der Farbe des Klebemittels eine Markierung der einzelnen Schnellmontageelemente hinsichtlich der Größe, Haltekraft, Dauerhaftigkeit und/ oder Verwendung durchgeführt wird. Ebenfalls verwendet werden kann die Farbe bzw. Transparenz des Klebemittels als Indikator für die Stabilität, Vorbelastung oder das Alter des Klebemittels. Die Farbgebung beziehungsweise deren Fehlen kann auch als Gestaltungselement verwendet werden.

Eine als vorteilhaft angesehene weitere Ausführungsform des erfindungsgemäßen Schnellmontageelements sieht vor, dass die Klemmbacken gegenüber einer Längsachse verschwenkbar angeordnet sind. Die Verschwenkung der Klemmbacken erfolgt dabei insbesondere in radialer oder axialer Richtung innerhalb der Hülse. Beim Einführen eines mit dem Schnellmontageelement zusammenwirkenden Befestigungselements werden die Klemmbacken, vermittelt durch das Befestigungselement, in der Hülse radial nach außen verschwenkt. Zusätzlich weist die Verschwenkung eine axiale Komponente auf. Nach Ende des Einführvorgangs des Befestigungselements bewirkt die dauerelastische Klebeverbindung bzw. das Klebemittel, dass die Spannbacken in ihre Ausgangsposition zurückschwenken und dabei in die Gewindegänge eines Befestigungselements eingreifen und so das Schnellmontageelement und das Befestigungselement gegeneinander festlegen. Durch eine Drehung auf dem Befestigungselement kann das Schnellmontageelement angelegt und die Verbindung zusätzlich gefestigt und spielfrei gesichert werden.

Die Hülse weist bevorzugt einen sich radial auf ein Hülsenzentrum erstreckenden Hülsenboden und einen Hülsenmantel auf. An einem Übergang von dem Hülsenboden zu dem Hülsenmantel kann an der Innenseite der Hülse ein Widerlagersattel für die Klemmbacken gebildet sein. Dieser Widerlagersattel dient als Anlage für einen insbesondere komplementär zum Widerlagersattel ausgeführten Klemmbackenfuß, der mit dem Widerlagersattel in Eingriff bringbar ist und die Verschwenkbarkeit der Klemmbacke im Hülseninneren erlaubt.

Als günstig wird angesehen, wenn die Hülse an ihrem Hülsenboden eine konische Einführungsseite für die Einführung des Befestigungselements aufweist. Hierdurch kann die Verbindung und Montage vereinfacht werden. Die Hülse enthält ferner eine Bohrung, die von dem Befestigungselement durchgriffen wird und eine Führung für das Befestigungselement bildet. Die Bohrung weist im Verhältnis zur Hülsenlänge gesehen eine erhebliche Dicke auf. Die Dicke kann hierbei zwischen einem Zehntel und der Hälfte der Hülsenlänge liegen. Die für die Bohrung gewählte axiale Länge bzw. die Dicke des Hülsenbodens ist hierbei abhängig zum einen von den Abmaßen des Schnellmontageelements, zum anderen abhängig von dem mit dem Schnellmontageelement in Eingriff zu bringenden Befestigungselement. Als günstig wird angesehen, wenn die axiale Länge des Führungsanschlags bzw. der Bohrung zum Durchmesser des Befestigungselements, beispielsweise eines Gewindestabes, >0,1, insbesondere >0,2, insbesondere bevorzugt >0,3, insbesondere bevorzugt >0,4 ist. Die Verhältniszahl kann auf dem Montageelement angegeben werden, sodass hier eine klare Zuordnung zu bestimmten Befestigungselementen bzw. Befestigungselementklassen durchgeführt werden kann. Zusätzlich oder alternativ besteht auch die Möglichkeit, dass über die Klebemittel eine farbliche Markierung der Verhältnisse durchgeführt wird. Der Verwender erfährt somit auf einen Blick, für welche Stärke bzw. welchen Durchmesser von Befestigungselementen das jeweilige Schnellmontageelement geeignet und einsetzbar ist. Das jeweilige Verhältnis ist auch Ausdruck dafür, welche Bauteile bzw. in welchem Gewichtsbereich Bauteile miteinander verbunden werden können, um die auftretenden bzw. eingetragenen Kräfte aufnehmen und ableiten zu können.

Das erfindungsgemäße Schnellmontageelement ist bevorzugt als Schnellspannmutter zum Aufstecken auf eine Gewindestange ausgebildet. Nach dem Aufstecken des Schnellmontageelements auf eine serienmäßig übliche Gewindestange bzw. ein sonstiges, mit Gewinde ausgestattetes Befestigungselement kann, um eine wesentliche Verbesserung der Verbindung zwischen Schnellmontageelement und Befestigungselement zu erreichen, ein Anlegen bzw. Festziehen der Schnellspannmutter erfolgen. Die Schnellspannmutter weist hierzu eine entsprechende Außengeometrie bzw. Form auf, sodass ein Werkzeug angreifen kann.

Um eine verdeckte Montage durchführen zu können, wird es als günstig angesehen, wenn das Schnellmontageelement als in ein Bauteil oder eine Bauteilaufnahme einsenkbar ausgebildet ist. Das Bauteil weist hierzu eine Bohrung oder Ausnehmung auf, deren Durchmesser geringfügig größer als der des Schnellmontageelements bzw. der Hülse ist.

Um eine noch stabilere Verbindung von Schnellmontageelement und Bauteil zu erreichen, wird es als vorteilhaft angesehen, wenn die Hülse einen in Montagerichtung verlängerten Hülsenmantel aufweist, der dann in das Bauteil bzw. eine dort vorgesehene Bohrung hineinragt und so eine stabile Verbindung zwischen Schnellmontageelement und Bauteil gewährleistet. Je nach Krafteintrag bzw. Gewicht der zu verbindenden Bauteile wird es als vorteilhaft angesehen, wenn das Schnellmontageelement ein Verbindungsmittel aufweist, das eine lösbare Verbindung von zwei oder mehreren Schnellmontageelementen zulässt. Die Schnellmontageelemente werden dabei insbesondere in axialer Richtung hintereinander angeordnet.

Gleichermaßen von der Erfindung umfasst ist eine Anordnung von zwei oder mehr Schnellmontageelementen nebeneinander. Das Verbindungsmittel ist günstigerweise als in oder auf der Hülse und/oder dem Hülsenmantel vorgesehenes Gewinde ausgebildet. Alternativ besteht die Möglichkeit, dass das Verbindungsmittel als Steck-, Rast-, Klebe-, Schweiß- oder Bajonettverbindung ausgebildet ist. Die Anzahl der miteinander zu verbindenden Schnellmontageelemente bleibt hierbei offen. Je nach Größe der zu verbindenden Bauteile und den hierdurch aufzunehmenden Lasten kann eine Erweiterung des Schnellmontageelements durchgeführt werden. Hierdurch erhöht sich dann auch die maximal in das Schnellmontageelement eintragbare und durch diese haltbare Kraft. Eine weitere Ausführungsform des Schnellmontageelements sieht vor, dass zwei oder mehrere Klemmbacken in zur Hülsenlängsachse in axialer Richtung übereinander angeordnet sind. Dies bedeutet, dass das Schnellmontageelement in seinem Inneren zwei oder mehrere Reihen von übereinanderliegenden Klemmbacken aufweist, die beim Einsetzen eines Befestigungselements an dieses angelegt werden können und so die Verbindung weiter verbessern bzw. die Haltekräfte des Schnellmontageelements vergrößern.

Gleiches wird dadurch erreicht, dass zwei oder mehrere Klemmbackenpakete parallel nebeneinander angeordnet werden.

Bei der verdeckten Montage des Schnellmontageelements in einem Bauteil wird dieses in der Regel in dem Bauteil eingesenkt. Nach außen sichtbar bleibt lediglich der Hülsenboden bzw. eine dort vorgesehene konisch aufgewölbte Führungsschräge für das Befestigungselement. Um die Festlegung des Schnellmontageelements im Bauteil weiter zu verbessern und zu vereinfachen, sieht eine Weiterbildung des erfindungsgemäßen Schnellmontageelements vor, dass die Hülse ein sich radial von der Hülsenlängsachse wegerstreckendes Stützelement, insbesondere einen Flansch aufweist. Dieser Flansch umgibt die Hülse bzw. verlängert diese radial und stellt gleichzeitig eine Anlagefläche auf einem Bauteil zur Verfügung. Das Bauteil kann somit zum einen eine Bohrung oder Ausnehmung zum Einsetzen des Schnellmontageelements aufweisen, darüber hinaus kann um die Ausnehmung herum eine sich radial zu der Ausnehmung erstreckende Formgebung oder Ausfräsung vorgesehen werden, in die das Stützelement eingesetzt wird, soweit bis die äußere Abschlussfläche des Stützelements und die äußere Abschlussfläche des Bauteils bündig aufeinanderliegen bzw. sich eine plane Fläche ergibt. In dem Stützelement, das heißt beispielsweise einem Flansch, können zusätzliche Bohrungen vorgesehen werden, über die die Kombination aus Schnellmontageelement und Stützelement bzw. Flansch mit dem Bauteil verschraubt werden kann. Als Alternative zu einem Flansch können auch ein oder mehrere Vorsprünge vorgesehen werden, die dann die Bohrungen tragen. Die Vorsprünge sind nach Art von sich radial zur Hülse bzw. zum Hülsenzentrum erstreckende Zungen, Ösen oder dergleichen ausgebildet und übernehmen bezüglich der Festlegung des Schnellmontageelements im Bauteil die Funktion eines sich vollständig um die Hülse herum erstreckenden Flanschs oder erweiterten Rands. Das Stützelement, insbesondere der Flansch oder der Vorsprung können zusätzlich auch, wie in einer bevorzugten Ausführungsform des Schnellmontageelements vorgesehen, als Abstandshalter gegenüber einem mit dem Schnellmontageelement in Wirkverbindung bringbaren Befestigungselement werden. Das Stützelement verhindert dabei ein zu tiefes Eindringen des Befestigungselements in das Schnellmontageelement. Auch besteht so die Möglichkeit, wenn das Stützelement lediglich auf der Oberfläche des Bauteils aufliegt, nicht jedoch in dieses eingesenkt ist, dass ein Abstand zwischen den beiden zu verbindenden Bauteilen einstellbar ist, der mindestens der Dicke bzw. Stärke des Stützelements entspricht.

In einer weiteren Ausführungsform kann eine Zugriffsmöglichkeit auf die Klemmbacken bestehen, die ein Lösen der Klemmbacken von dem mit dem Schnellmontageelement in Eingriff stehenden Befestigungselement zulässt. Hierzu weist die Hülse in wenigstens einer ihrer Begrenzungsflächen, das heißt in ihrer Mantelfläche und/oder Hülsenboden wenigstens eine Ausnehmung oder Bohrung auf. Diese Ausnehmung erlaubt einen Zugriff auf die Klemmbacken, beispielsweise unter Zuhilfenahme eines speziellen Werkzeugs. Durch das Werkzeug kann, nach Durchgriff der Ausnehmung bzw. Bohrung, eine Zwangsverschwenkung der Klemmbacken durchgeführt werden. Hierdurch kann die Abstützfunktion der Klemmbacken von dem Befestigungselement, das heißt von beispielsweise einer Gewindestange durchgeführt und Schnellmontageelement und Befestigungselement schnell und einfach voneinander getrennt werden.

Die Klemmbacken, die bevorzugt in einem erfindungsgemäßen Schnellmontageelement verwendet werden, weisen wenigstens einen zu einem Befestigungselement gewandten Abschnitt auf, der mit Haltestrukturen versehen ist. Diese Haltestrukturen sind insbesondere als Gewinde ausgebildet und mit einem Befestigungselement in Eingriff bringbar. Hierbei kommt es insbesondere zu einer Verrastung zwischen Haltestrukturen und Gewindeausbildung des Befestigungselements.

Die Anordnung des Schnellmontageelementes in einem Bauteil wird insbesondere dadurch verbessert, dass die Hülse auf ihrer äußeren Oberfläche eine Strukturierung aufweist. Diese Strukturierung erlaubt eine kraft-, form- oder stoffschlüssige Verbindung mit dem Einbauort. Das Formteil kann hierbei beispielsweise eine gegenüber der Hülse einen verringerten Durchmesser aufweisende Ausnehmung aufweisen, in die das Schnellmontageelement eingeschlagen werden kann. Die Strukturierung der Oberfläche der Hülse schafft dann einen kraft- beziehungsweise formschlüssigen Verbund mit dem Einbauort. Eine alternative Ausgestaltung der Hülsenoberfläche sieht vor, dass auf der äußeren Oberfläche ein Gewinde, eine Zahnung, eine Mehr- oder Sechskantpratze oder wenigstens eine Lamelle vorgesehen ist. Derartige Oberflächengestaltungen erlauben nicht nur ein Einsetzen des Schnellmontageelementes in ein aus Holz gefertigtes Bauteil, sondern lassen auch ein Eingießen des Schnellmontageelementes beispielsweise in ein Fertigbetonteil zu und sichern hier einen zufriedenstellenden, dauerhaften und hochbelastbaren Verbund zwischen Schnellmontageelement und Bauteil beziehungsweise Bauteilkörper.

In einer weiteren vorteilhaften Weiterbildung kann die Hülse des Schnellmontageelementes auch in Form einer Platte mit einer eingeformten, insbesondere eingesenkten oder eingefrästen, Vertiefung ausgebildet sein. Der Widerlagersattel für die Klemmbacken wird in dieser Ausführungsform durch den Rand der Vertiefung zur Verfügung gestellt. Die Klemmbacken überragen dabei bevorzugt die Vertiefung. Alternativ zu einer Anordnung der Klemmbacken in einer Platte, insbesondere Stahlmontageplatte, besteht die Möglichkeit, dass lediglich die Hülse als Platte, insbesondere Stahlmontageplatte, ausgebildet ist, die eine die Hülse bildende Aufnahmebohrung aufweist und wobei die Klemmbacken in die Aufnahmebohrung eingesetzt und/oder eingeklebt sind. Die derart ausgebildete Platte mit daran oder darin eingesetzten oder eingeklebten Klemmbacken kann dann ähnlich der vorhergehend beschriebenen Hülse als Schnellmontageelement, beispielsweise in einem Bauteil oder dergleichen verwendet und eingesetzt werden. Unbeachtet kann in diesem Fall die Länge der Hülse bleiben, da kein Hülsenmantel vorgesehen ist. Die eigentliche Hülse wird in dieser Ausführungsform durch eine im Bauteil vorgesehene Bohrung oder Ausnehmung zur Verfügung gestellt, in die die Klemmbacken hineinragen.

Eine weitere vorteilhafte Ausführungsform des erfindungsgemäßen Schnellmontageelementes sieht vor, dass die Hülse und/oder die Klemmbacken ganz oder teilweise aus Kunststoff, Metall, einer Metalllegierung, einem Kunststoffmetallverbundmaterial oder Mischungen aus den zuvor genannten gebildet sind. Das jeweils gewählte Material definiert auch das Herstellungsverfahren für die Hülse beziehungsweise die Klemmbacken. So besteht beispielsweise die Möglichkeit, dass die Hülse als Drehteil, als Gussteil oder als Schmiedeteil in einem Tiefzieh- oder Senkverfahren hergestellt wird. Die Klemmbacken selbst können ebenfalls als Drehteil oder in den zuvor dargestellten Verfahren, beispielsweise in einem Spritzgieß-, Gieß- oder Schmiedeverfahren hergestellt werden.

In einer weiteren Ausführung kann die Hülse mit den darin abgestützten Klemmelementen innerhalb einer weiteren äußeren Hülse untergebracht sein, wobei zwischen der Hülse und der äußeren Hülse mindestens ein z.B. scheibenförmiges Isolierelement angeordnet ist. Durch dieses Isolierelement kann eine verbesserte Schallisolation erreicht werden.

Die Erfindung betrifft außerdem ein Befestigungssystem, bei dem ein zuvor beschriebenes Schnellmontageelement mit einem als Gewindeelement ausgebildeten Befestigungselement zusammenwirkt. Das Befestigungselement kann als eine in das Schnellmontageelement einführbare Gewindestange ausgebildet sein.

Als günstig wird angesehen, wenn eine Verrastung oder Verschraubung mit dem Schnellmontageelement vorgesehen ist, wobei insbesondere das Befestigungselement mit den Klemmbacken verrastend in Eingriff bringbar ist.

Als günstig erweist es sich, wenn ein insbesondere verstellbares Begrenzungselement am Befestigungselement vorgesehen ist. Dieses Begrenzungselement ist dabei günstigerweise höhen- oder tiefenverstellbar und kann für die Einstellung der Eindringtiefe des Befestigungselementes in das Schnellmontageelement verwendet werden. Das Begrenzungselement ist bevorzugt als Stellmutter, Rastelement, Ring, Lasche, Vorsprung oder Flansch ausgebildet und entweder direkt am Befestigungselement angebracht oder aber auf dieses aufschraubbar. Je nach gewünschter Eindringtiefe des Befestigungselementes in das Schnellmontageelement wird eine Verstellung des Begrenzungselementes beziehungsweise eine Anordnung des Begrenzungselementes vorgenommen und dieses dann dauerhaft oder lösbar am Befestigungselement angebracht, beispielsweise mit diesem verklebt, verschweißt, verschraubt oder verrastet.

Eine Weiterbildung des erfindungsgemäßen Befestigungssystems, die als günstig angesehen wird, sieht vor, dass ein das Bauteil oder den Einbauort für das Bauteil überragende erste Abschnitt und ein in das Bauteil oder den Einbauort für das Bauteil einstehender und/oder eingesenkter zweiter Abschnitt des Befestigungselementes vorgesehen ist. Das Schnellmontageelement ist dabei auf den ersten Abschnitt, der das Bauteil beziehungsweise den Einbauort für das Bauteil überragt, aufsteck-, aufsetz- oder aufschraubbar. Dies kann in einem Arbeitsschritt durchgeführt werden, der das Bauteil oder den Einbauort überragende Abschnitt des Befestigungselementes wird dabei in das Schnellmontageelement beziehungsweise eine dort vorgesehen Bohrung eingeführt und bewirkt ein Aufspreizen der Klemmbacken. Es ist somit eine schnelle Montage ohne Drehung des Schnellmontageelementes möglich. Hierdurch wird die Montagezeit wesentlich reduziert. Gleichfalls wird, nach Abschluss des Aufsteckens beziehungsweise des Einschiebens des Befestigungselementes in das Schnellmontageelement, ein Eingriff der Klemmbacken beziehungsweise einer daran vorgesehenen Haltestruktur mit dem Befestigungselement bewirkt, wodurch eine dauerhafte Verbindung zwischen Schnellmontageelement und Befestigungselement und damit der mit diesen versehenen Bauteile erreicht wird. Ein insbesondere verdecktes Aufstecken, Aufsetzen oder Aufschrauben, das heißt Aufstecken oder Aufclipsen des Schnellmontageelementes auf dem Befestigungselement, wird somit zur Verfügung gestellt, was sich als besonders vorteilhaft erweist, da die Sichtflächen nicht durch das Befestigungssystem beziehungsweise dessen Elemente bei Nachfolgearbeiten beeinträchtigt werden.

Eine Selbstnachstellung der Verbindung von Schnellmontageelement und Befestigungselement wird als vorteilhaft angesehen. Eine derartige Selbstnachstellung erfolgt insbesondere bei Bewegungen aufgrund von Materialschwund, Duktilität oder Montageluftmassen am Anschluss des Bauteils. Im Fall von Schwund, Spiel oder Montageluft bleibt somit eine zuverlässige Verbindung bestehen. Da eine axiale Beweglichkeit in Einsteckrichtung möglich ist, rutscht in einer Ausführungsform mit Gewindegängen an den Klemmbacken des Schnellmontagelementes und dem Befestigungselement der Gewindegang gegenüber den Klemmbacken wenigstens eine Zahnung weiter, wenn ein entsprechendes Spiel oder ein Schwund auftritt. Diese Selbstnachstellmöglichkeit ist beispielsweise bei aufgedrehten Muttern nicht möglich und stellt somit einen wesentlichen weiteren Vorteil des erfindungsgemäßen Befestigungssystems beziehungsweise der darin vorgesehenen Elemente dar.

In einer weiteren zweckmäßigen Ausgestaltung kann zwischen dem Schnellmontageelement und dem Befestigungselement ein weiteres Isolier- und/oder Dämpfungselement vorgesehen sein. Durch dieses Isolier- und/oder Dämpfungselement kann die Schalldämmung am Bauteilanschluss verbessert und optimiert werden. Außerdem kann durch das Dämpfungselement die Duktilität der Verbindung erhöht, das Befestigungselement zusätzlich stabilisiert und die Dichtigkeit an der Stoßstelle verbessert werden.

Zweckmäßigerweise ist das Isolier- und/oder Dämpfungselement zwischen einem Auflageteil des Befestigungselements und dem Schnellmontageelement angeordnet. Das Dämpfungselement kann aus einem innerhalb einer Umhüllung angeordneten Kleb- oder Dichtstoff hergestellt sein. Das Dämpfungselement kann aber auch ohne Umhüllung aus einem entsprechenden Dämpfungs- oder Dämmmaterial hergestellt sein.

Weitere Besonderheiten und Vorzüge der Erfindung ergeben sich aus der folgenden Beschreibung bevorzugter Ausführungsbeispiele anhand der Zeichnung. Es zeigen:
- **Fig. 1a, 1b**: ein erfindungsgemäßes Schnellmontageelement vor bzw. nach Einsetzen eines Befestigungselementes jeweils in Schnittdarstellung;
- **Fig. 2**: eine weitere Ausführungsform eines erfindungsgemäßen Schnellmontageelementes mit eingesetztem Befestigungselement;
- **Fig. 3**: eine Einbaubeispiel des erfindungsgemäßen Schnellmontageelementes in einer Schnittansicht;
- **Fig. 4**: das Schnellmontageelement von Figur 3 in einer Unteransicht;
- **Fig. 5**: ein weiteres Ausführungsbeispiel eines erfindungsgemäßen Schnellmontageelementes in einer Schnittdarstellung;
- **Fig. 6**: eine Draufsicht auf das Schnellmontageelement 1 von Figur 5 noch ohne Klebemittel;
- **Fig. 7**: ein weiteres Ausführungsbeispiel eines erfindungsgemäßen Schnellmontageelementes in einer Schnittdarstellung;
- **Fig. 8**: ein weiteres Ausführungsbeispiel eines erfindungsgemäßen Schnellmontageelementes in einer Schnittdarstellung und
- **Fig. 9**: ein weiteres Ausführungsbeispiel eines erfindungsgemäßen Schnellmontageelementes in einer Schnittdarstellung.

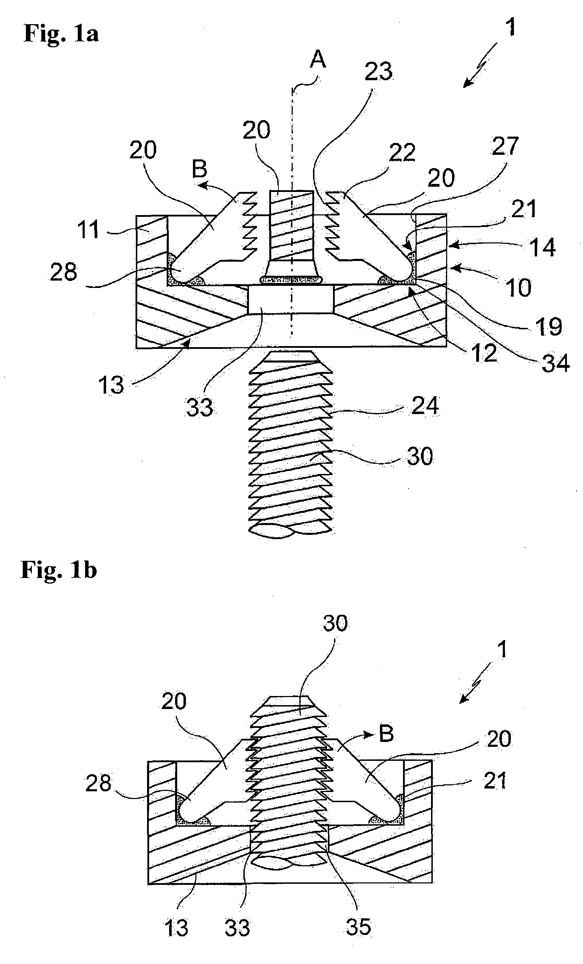

In den Figuren 1a und 1b ist ein Ausführungsbeispiel eines erfindungsgemäßen Schnellmontageelementes 1 vor bzw. nach dem Einsetzen eines Befestigungselementes 30 gezeigt. Das gezeigte Schnellmontageelement 1 weist eine Hülse 10 und mehrere innerhalb der Hülse 10 angeordnete Klemmbacken 20 auf. Die Hülse 10 enthält einen Hülsenboden 13 sowie einen Hülsenmantel 14, der die Klemmbacken 20 umgibt. An einem Übergang 34 von dem Hülsenboden 13 zum hohlzylindrischen Hülsenmantel 14 ist an der Hülseninnenseite 27 der Hülse 10 ein Widerlagersattel 12 für die Klemmbacken 20 vorgesehen. Die Klemmbacken 20 werden innerhalb der Hülse 10 durch eine Klebeverbindung 21 mittels eines Klebemittels 19 gehalten, das im Ausführungsbeispiel der Figuren 1a und 1b auf den Klemmbacken 20 aufgetragen wurde. Die so ausgebildete Klebeverbindung 21 ist dauerelastisch und umschließt einen Klemmbackenfuß 28 der Klemmbacken 20, sodass eine elastische Verschwenkbarkeit der Klemmbacke 20 innerhalb der Hülse 10 gegeben ist. Die Klebeverbindung 21 kann selbstverständlich auch durch ein vollflächig auf der Innenseite des Hülsenbodens 13 aufgetragenes Klebemittel 19 realisiert werden. Parallel oder alternativ besteht die Möglichkeit, das Klebemittel 19 punkt-, linien- oder flächenförmig nur im Bereich der Klemmbacken 20 bzw. des Klemmbackenfußes 28 vorzusehen.

Der Hülsenmantel 14 kann an seinem Rand 11 zusätzlich eine auf das Hülsenzentrum hin ausgerichtete Abkantung aufweisen und somit eine Begrenzung für das Aufspreizen der Klemmbacken 20 zur Verfügung stellen. Hierdurch wird vermieden, dass ein zu weites Verschwenken der Klemmbacken 20 in radialer Richtung B erfolgt, sodass nicht mehr ausreichend Rückstellkräfte durch das Klebemittel 19 bzw. die Klebeverbindung 21 zur Verfügung gestellt werden kann, um ein Rückschwenken der Klemmbacken 20 und den Eingriff mit dem Befestigungselement 30 zu gewährleisten.

Das Schnellmontageelement 1 in der Ausführungsform der Fig. 1a und 1b weist insgesamt vier Klemmbacken 20 auf, die mit einem in Fig. 1a außerhalb der Hülse 10 bzw. des Schnellmontageelementes 1 dargestellten Befestigungselement 30 verbindbar sind. Das beim gezeigten Ausführungsbeispiel mit einem Gewinde 24 versehene Befestigungselement 30 wird hierzu in eine im Hülsenboden 13 vorgesehene Bohrung 33 eingeführt. Der Hülsenboden 13 ist an der in der Zeichnung unteren Einführungsseite konisch ausgebildet, wodurch ein sicheres Zuführen und eine genaue Positionierung des Befestigungselementes 30 zur Bohrung 33 im Hülsenboden 13 gewährleistet werden kann. Die Bohrung 33 bildet eine Führung 35 für das Befestigungselement 30, wobei die axiale Länge der Führung 35 auf den Durchmesser des Befestigungselementes 30 abgestimmt werden kann. Durch eine ausreichend große Dimensionierung der Führung 35 und ein leichtes Übermaß bezüglich der Bohrung 33 kann ein sicheres und genaues Zusammenwirken von Klemmbacken 20 und Befestigungselement 30 gewährleistet werden.

Wird das Befestigungselement 30 durch die Bohrung 33 in die Hülse 10 eingeführt, werden die Klemmbacken 20 durch das Befestigungselement 30 in radialer Richtung B gespreizt. Dies erlaubt ein schnelles Verbinden bzw. Verschieben des Schnellmontageelementes 1 auf dem Befestigungselement 30. Nach Abschluss der Montage bzw. nach Erreichen einer definierten Eintauchtiefe des Befestigungselementes 30 in das Schnellmontageelement 1 bewirkt das dauerelastische Klebemittel 19, über das die Klemmbacken 20 im Inneren der Hülse 10 gehalten sind, ein Rückschwenken entgegen der Pfeilrichtung B und damit ein Anlegen der Klemmbacken 20 am Befestigungselement 30. Im Zuge dessen greifen im vorderen Bereich 22 der Klemmbacken 20 vorgesehene Haltestrukturen 23 in das Gewinde 24 des Befestigungselementes 30 ein und halten damit die Verbindung aus Schnellmontageelement 1 und Befestigungselement 30. Ein Herausziehen des Befestigungselementes 30 aus dem Schnellmontageelement 1 wird hierdurch verhindert und eine dauerhafte Verbindung hergestellt. Die Klemmbacken 20 stehen mit dem Gewinde 24 auf der Oberfläche des Befestigungselementes 30 in Eingriff und sichern das Befestigungselement 30 gegen ein Herausrutschen aus dem Schnellmontageelement 1. Es wird somit eine dauerhafte und belastbare Verbindung zwischen Befestigungselement 30 und Schnellmontageelement 1 zugfest zur Verfügung gestellt.

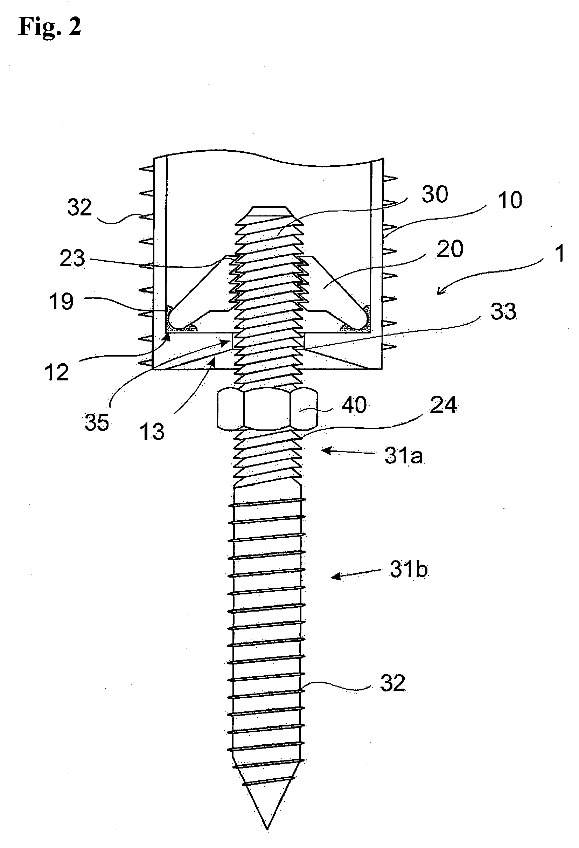

In Figur 2 ist ein weiteres Ausführungsbeispiel eines Schnellmontageelements 1 gezeigt. Bei dieser Ausführung sind an der Außenseite der die Klemmbacken 20 aufnehmenden Hülse 10 Haltestrukturen 32 zur Festlegung in einem Bauteil vorgesehen. Die Haltestrukturen 32 können z.B. in Form von Lamellen ausgebildet sein, die eine Verbindung des Schnellmontageelements 1 z.B. mit einem aus Holz bestehenden Bauteil ermöglichen. Das Schnellmontageelement 1 kann so z.B. in eine entsprechende Bohrung eines Bauteils eingeschraubt oder eingeschlagen werden und wird dort durch die lamellenförmigen Haltestrukturen 32 gehalten.

Das in Figur 2 gezeigte Befestigungselement 30 weist zusätzlich ein Begrenzungselement 40 in Form einer auf das Gewinde 24 aufgeschraubten Mutter auf. Über die Position des Begrenzungselementes 40 auf dem Gewinde 24 kann die Eintauchtiefe des Befestigungselementes 30 in das Schnellmontageelement 1 festgelegt werden. Durch die konisch ausgebildete untere Einführungsseite des Hülsenbodens 13 wird das Befestigungselement 30 bei der Einführung zu der zentral im Hülsenboden 13 vorgesehenen Bohrung 33 geleitet. Die Bohrung stellt auch hier eine Führung für das Befestigungselement 30 dar. Das hier gezeigte Befestigungselement 30 weist insgesamt zwei unterschiedliche Haltestrukturen auf. Während ein mit dem Schnellmontageelement 1 in Eingriff gelangender Abschnitt 31a das mit den Klemmbacken 20 bzw. den dort vorgesehenen Haltestrukturen 23 in Eingriff bringbare Gewinde 24 aufweist, enthält ein zweiter Abschnitt 31b Lamellen 32, über die das Befestigungselement 30 beispielsweise in einem Holzbauteil fixiert werden kann. Das Befestigungselement 30 bzw. dessen zweiter Abschnitt 31b wird hierzu in ein Bauteil eingeschlagen und über die lamellenartigen Haltestrukturen 32 dort verankert. Alternativ besteht auch die Möglichkeit, wenn beispielsweise eine Verbindung von Betonbauteilen erfolgen soll, dass der zweite Abschnitt 31b in das Bauteil eingegossen wird. Neben den hier dargestellten Lamellen 32 besteht selbstverständlich die Möglichkeit, auch im zweiten Abschnitt 31b ein Gewinde vorzusehen, über das das Befestigungselement 30 in ein Bauteil eingeschraubt werden kann. In einfacher Art und Weise kann somit eine Verbindung von Bauteilen erfolgen.

Bei der in Fig. 2 gezeigten Ausführung ist lediglich ein Schnellmontageelement 1 zur Verbindung mit dem Befestigungselement 30 gezeigt. Bei größeren Lasten könnten aber auch zwei oder mehrere, ggf. miteinander verbundene, übereinander angeordnete Schnellmontagelemente 1 vorgesehen sein. So können z.B. mehrere übereinander liegende Reihen von Klemmbacken in einer gemeinsamen Hülse untergebracht oder mehrere Schnellspannelemente miteinander gekoppelt sein.

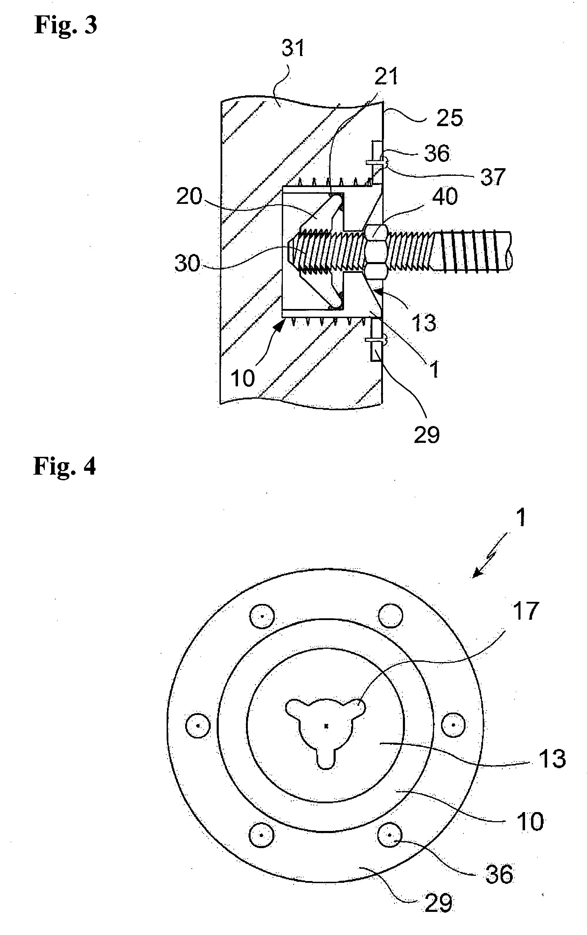

In den Figuren 3 und 4 ist ein Beispiel für die Befestigung eines Schnellmontageelementes 1 in einem Bauteil 31 gezeigt. Bei dieser Ausführung weist die Hülse 10 ein sich radial von der Hülsenlängsachse nach außen erstreckendes Stützelement 29 in Form eines Flansches auf. Dieses flanschförmige Stützelement 29 umgibt die Hülse 10 bzw. verlängert diese radial nach Außen und stellt gleichzeitig eine Anlagefläche auf dem Bauteil 31 dar. Beim Einbau des Schnellmontageelementes 1 wird die Hülse 10 in das Bauteil 31 eingesetzt und das flanschförmige Stützelement 29 auf der äußeren Oberfläche des Bauteils 31 aufliegend angeordnet. Alternativ besteht die Möglichkeit, dass das Bauteil 31 eine an das Stützelement 29 angepasste Ausnehmung aufweist, sodass ein bündiges Einsetzen des Schnellmontageelementes 1 in die Bauteiloberfläche möglich ist. In dem flanschförmigen Stützelement 29 befinden sich Durchgangsöffnungen 36 für Schrauben 37 oder andere Befestigungsmittel, mit deren Hilfe das Schnellmontageelement 1 in dem Bauteil 31 zusätzlich zu den oder anstelle der am Außenumfang der Hülse 10 vorgesehenen Haltestrukturen 32 fixiert werden kann.

Wie aus der Unteransicht der Figur 4 hervorgeht, ist im Hülsenboden 13 der mit dem flanschförmige Stützelement 29 versehenen Hülse 10 eine Ausnehmung 17 vorgesehen, über die ein spezielles Werkzeug in das Innere der Hülse 10 eingeführt und somit ein Lösen der hier nicht gezeigten Klemmbacken 20 vom dem das Schnellmontageelement 1 eingesetzten Befestigungselement 30 durchgeführt werden kann. Ein Werkzeug kann nach Durchgriff durch die Ausnehmung 17 eine Zwangsverschwenkung der Klemmbacken 20 durchführen und somit die Klemmbacken 20 von dem Befestigungselement 30, das heißt beispielsweise einer in das Schnellmontageelement 1 eingeführten Gewindestange, lösen, sodass Schnellmontageelement 1 und Befestigungselement 30 schnell und einfach voneinander getrennt werden können.

Bei der in den Figuren 3 und 4 gezeigten Ausführung wird die Hülse 10 über das flanschförmige Stützelement 29 und die lamellenförmigen Haltestrukturen 32 an dem Bauteil 31 fixiert. Die Hülse 10 kann aber auch nur über die an deren Außenseite vorgesehenen Haltestrukturen 32 in einer entsprechenden Aufnahmeöffnung des Bauteils 31 gehalten oder in Form einer Platte mit einer entsprechenden Vertiefung ausgebildet sein, die über Schrauben oder andere Befestigungselemente an dem Bauteil 31 fixiert wird.

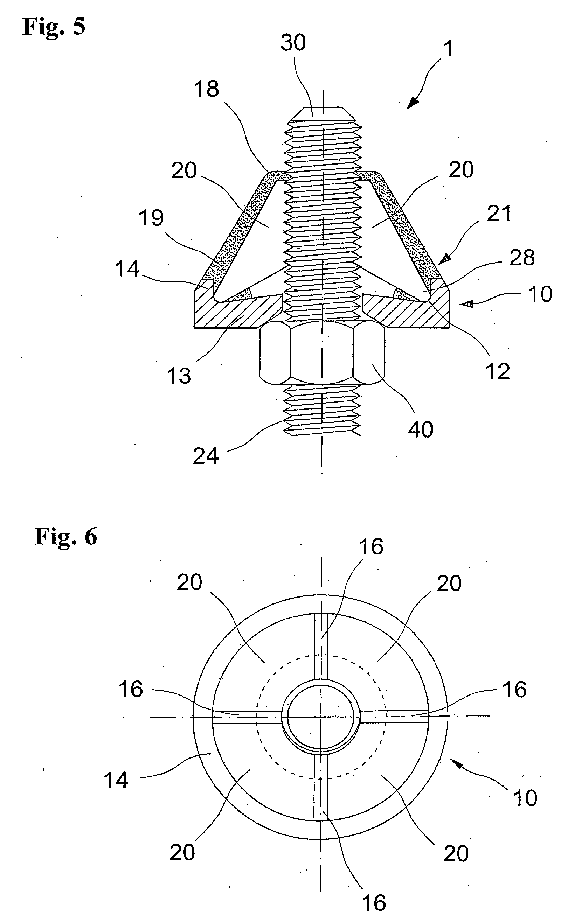

In den Figuren 5 und 6 ist ein weiteres Ausführungsbeispiel eines Schnellmontageelementes 1 gezeigt. Auch bei dieser Ausführung weist die Hülse 10 einen Hülsenboden 13 und einen Hülsenmantel 14 auf. Im Gegensatz zu den vorherigen Ausführungen ist der Hülsenmantel 14 jedoch nur in Art eines Randes und vergleichsweise kurz ausgebildet. Dennoch ist auch hier an einem Übergang 34 von dem Hülsenboden 13 zum Hülsenmantel 14 an der Hülseninnenseite der Hülse 10 ein Widerlagersattel 12 für die Klemmbacken 20 vorgesehen.

An dem Widerlagersattel 12 stützen sich die Klemmbacken 20 mit ihrem Klemmbackenfuß 28 ab. Die Klemmbacken 20 werden auch hier in der Hülse 10 über eine die Verschwenkung der Klemmbacken 20 zulassende Klebeverbindung 21 mittels eines Klebemittels 19 gehalten. Bei dieser Ausführung ist die Klebeverbindung 21 jedoch derart ausgestaltet, dass die Klemmbacken 20 vollständig in das Klebemittel 19 eingebettet sind. Das Klebemittel 19 bildet eine die Klemmbacken 20 umschließende Abdeckung 18, welche die Klemmbacken 20 vollständig abdeckt und sich in Form eines Kegels von dem Hülsenboden 13 bis über die Klemmbacken 20 hinaus nach oben erstreckt. Die Klemmbacken 20 sind also von der Abdeckung 18 aus dem Klebemittel 19 vollständig abgedeckt. Dadurch ist das Schnellmontageelement 1 besser gegen Verschmutzung und Feuchtigkeitseintritt geschützt.

In Figur 6 ist eine Draufsicht auf das Schnellmontageelement 1 von Figur 5 noch ohne Klebemittel gezeigt. Wie aus dieser Darstellung hervorgeht, sind in der Hülse 10 vier über Schlitze 16 voneinander getrennte Klemmbacken 20 angeordnet. Von den vier innerhalb des Hülsenmantels 14 angeordneten Klemmbacken 20 wird das Befestigungselement 30 radial geklemmt.

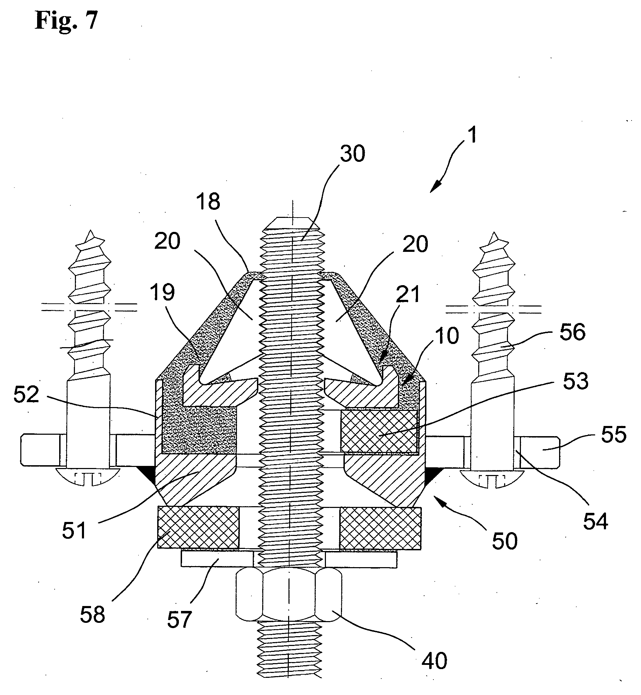

Figur 7 zeigt ein weiteres Ausführungsbeispiel eines Schnellmontageelements 1, bei dem ebenfalls eine die Verschwenkung der Klemmbacken zulassende Klebeverbindung 21 von Klemmbacken 20 und Hülse 10 mit Hilfe eines Klebemittels 19 vorgesehen ist. Die Klemmbacken 20 sind hier ebenso wie bei den Ausführungen der Figuren 5 und 6 vollständig durch das Klebemittel 19 abgedeckt. Bei dieser Ausführung ist die Hülse 10 mit den darin angeordneten Klemmbacken 20 in einer weiteren äußeren Hülse 50 untergebracht. Die äußere Hülse 50 weist einen Hülsenboden 51 und einen hier relativ dünnwandig ausgebildeten Hülsenmantel 52 auf. In der äußeren Hülse 50 kann die Hülse 10 durch das Klebemittel 19 gehalten sein, wie dies in der linken Hälfte der Figur 7 gezeigt ist. Zwischen der Innenseite des Hülsenbodens 51 und der Hülse 10 kann auch ein zusätzliches scheibenförmiges Isolierelement 53 angeordnet sein, wie dies in der rechten Hälfte der Figur 7 gezeigt ist Die Klebeverbindung 21 ist derart ausgebildet, dass durch das Klebemittel 19 sowohl die Klemmbacken 20 in der Hülse 10 als auch die Hülse 10 und ggf. das scheibenförmige Isolierelement 53 in der äußeren Hülse 50 gehalten sind. Auch hier bildet das Klebemittel 19 eine die Klemmbacken 20 umschließende Abdeckung 18, welche sich in Form eines Kegels bis über die Klemmbacken 20 hinaus nach oben erstreckt.

Die in Figur 7 untere Einführungsseite des Hülsenbodens 51 der äußeren Hülse 50 ist konisch ausgebildet. Dadurch kann die Einführung des hier als Gewindestange ausgebildeten Befestigungselements 30 erleichtert werden. An der äußeren Hülse 50 ist ein mit Durchgangsöffnungen 54 versehenes ringförmiges Stützeelement 55 in Form eines Flansches befestigt. Über dieses, z.B. an der äußeren Hülse 50 angeschweißte, ringförmige Stützeelement 55 kann das Schnellmontageelement 1 mit Hilfe von Schrauben 56 oder anderen geeigneten Befestigungselementen an einem Bauteil befestigt werden. Zwischen einer scheibenförmigen Auflage 57 an dem Befestigungselement 30 und der äußeren Hülse 50 kann gemäß Figur 7 ein weiteres scheibenförmiges Isolierelement 58 angeordnet sein. Die ebenfalls scheibenförmige Auflage 57 liegt auf dem als Mutter ausgebildeten Begrenzungselement 40 auf.

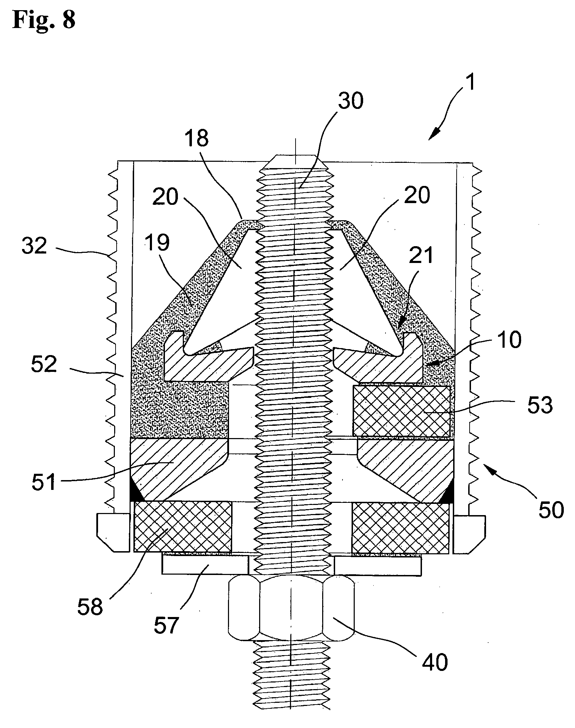

Das in Figur 8 gezeigte Ausführungsbeispiel entspricht im Wesentlichen der Ausführung von Figur 7, so dass einander entsprechende Bauteile auch mit denselben Bezugszeichen versehen sind. Im Unterschied zur Ausführung von Figur 7 wird hier der Hülsenmantel 52 durch ein Rohr und der Hülsenboden 51 durch eine im rohrförmigen Hülsenmantel 52 befestigte Auflagescheibe gebildet. Die den Hülsenboden 51 bildende Auflagescheibe kann mit dem rohrförmigen Hülsenmantel 52 fest verbunden, z.B. verschweißt, verschraubt oder verklebt, sein. An der Außenseite des rohrförmigen Hülsenmantels 52 befinden sich lamellenförmige Haltestrukturen 32 oder keilförmige Vorsprünge, über die das gezeigte Schnellspannelement 1 z.B. in einer entsprechenden Vertiefung eines aus Holz bestehenden Bauteils gehalten werden kann. Ansonsten entspricht der Aufbau dieses Schnellspannelements 1 dem in Figur 7 gezeigten Schnellspannelement 1 so dass bezüglich des Aufbaus und der Funktionsweise auf die dortige Beschreibung verwiesen wird.

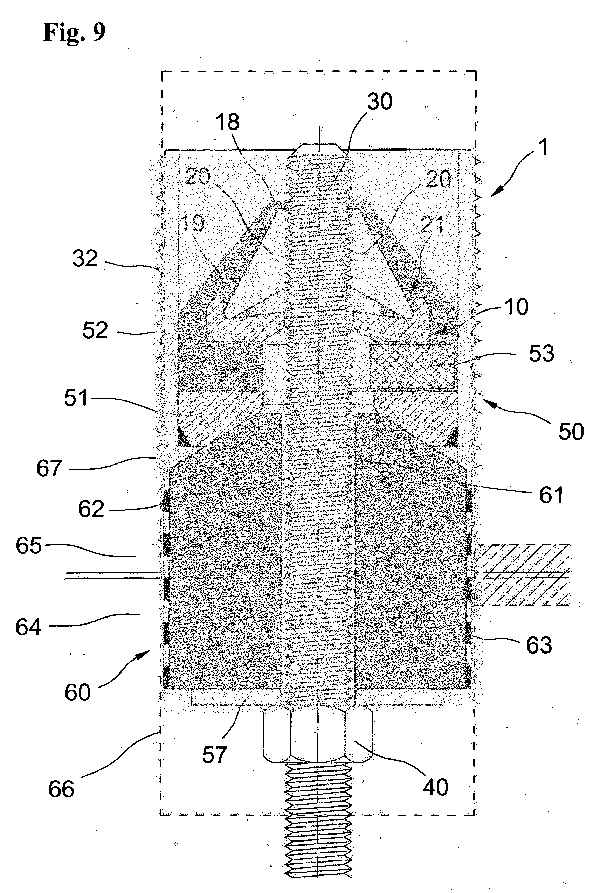

Bei der in Figur 9 gezeigten Ausführung ist zwischen dem Hülsenboden 51 der Hülse 50 und der Auflage 57 ein zusätzliches Dämpfungselement 60 angeordnet. Durch dieses Dämpfungselement 60 kann die Schalldämmung optimiert werden. Außerdem kann durch das Dämpfungselement 60 die Duktilität der Verbindung verbessert und die Montage erleichtert werden. Das Dämpfungselement 60 ist in Form eines mit einer Durchgangsöffnung 61 versehenen Stopfens ausgeführt, der auf das Befestigungselement 30 aufsteckbar ist und an seiner Oberseite ein an die konische untere Einführungsseite des Hülsenbodens 51 angepasstes konisches Oberteil aufweist. Das Dämpfungselement 60 besteht aus einem schalldämmenden, elastischen Material, das die nötige Stabilität zur Aufnahme evtl. Schub- oder Druckbelastungen enthält. Das Dämpfungselement 60 kann z.B. aus einer oder mehreren Dämpfungsscheiben oder aus einem Kleb- bzw. Dichtstoff 62 bestehen, der innerhalb einer z.B. aus Papier, Pappe, Folie, Blech oder dgl. bestehen Umhüllung 63 angeordnet ist. Die Umhüllung 63 dient als zuverlässige Trennwand und kann an ihrer Außenseite mit Verwendungshinweisen oder weiteren Informationen bedruckt sein. Bei dem Kleb- oder Dichtstoff kann es sich z.B. um einen selbsthärtenden, flexiblen 1-Komponeten Polyoxypropylen Kleb- oder Dichtstoff handeln, der in die Umhüllung eingebracht wird und eine Shore-Härte von mehr als 50 aufweist.

Das Dämpfungselement 60 kann gemäß Figur 9 zweckmäßigerweise zwischen zwei zu verbindenden Bauteileilen 64 und 65 angeordnet sein, wobei ein Teil des Dämpfungselements 60 in einer Versenkbohrung oder Vertiefung 66 des z.B. als Bodenplatte, Decke oder Wandbauteil ausgebildeten unteren Bauteils 64 und der andere Teil des Dämpfungselements 60 z.B. in einer Aufnahmebohrung 67 eines z.B. als Wandteil ausgebildeten oberen Bauteils 65 angeordnet sein kann. Dadurch kann die Schubkraft der Elemente untereinander verbessert und die Duktilität der Gesamtverankerung erhöht werden. Außerdem kann das Befestigungselement 30 durch das Dämpfungselement 60 zusätzlich geführt und die Bruchlast des Befestigungselements 30 angehoben werden.

In dem Ausführungsbeispiel von Figur 9 ist das Dämpfungselement 60 als ein auf das Befestigungselement 30 aufsteckbares Einzelteil ausgebildet. Das Dämpfungselement 60 kann aber auch aus zwei oder mehreren miteinander verbindbaren Teilen bestehen. In den miteinander verbindbaren Teilen des Dämpfungselements 60 können auch Steckverbinder integriert sein, um elektrische Verbindungen zu Sensoren oder anderen elektrischen Bauteilen zu ermöglichen.

Das in den gezeigten Ausführungsformen des Schnellmontageelementes 1 verwendete Klebemittel 19 garantiert eine zuverlässige Verbindung der Klemmbacken 20 mit der Hülse 10. Diese Klebeverbindung 21 erlaubt aufgrund der Elastizität des Klebemittels 19 die Verschwenkung und damit die Gelenkigkeit der Klemmbacken 20. Das Klebemittel 19 ist aufgrund der vorgesehenen langen Einsatzzeiten besonders alterungsstabil und bleibt somit über lange Zeiträume elastisch. Das Klebemittel 19 ist zudem in einem großen Temperaturbereich einsetzbar und garantiert eine lang dauernde stabile Verbindung. Die Verbindung zwischen Schnellmontageelement 1 und Befestigungselement 30 ist generell selbstnachstellend, so dass bei Schwund, Spiel oder Montageluft eine zuverlässige Verbindung bestehen bleibt, da das Schnellmontageelement 1 bzw. das Befestigungselement 30 im Gegensatz zu herkömmlichen aufgedrehten Muttern im Schnellmontageelement 1 entlang der Zahnungen weiterrutscht, wenn ein entsprechendes Spiel oder ein Schwund auftritt und somit eine Nachführung bzw. eine Selbstnachstellung des Verbundes aus Schnellmontageelement 1 und Befestigungselement 30 erfolgt.

## Patentansprüche

1. Schnellmontageelement mit
- wenigstens zwei Klemmbacken (20) und
- einer die Klemmbacken (20) umschließenden Hülse (10)
**dadurch gekennzeichnet, dass** eine die Verschwenkung der Klemmbacken (20) zulassende Klebeverbindung (21) von Klemmbacken (20) und Hülse (10) vorgesehen ist.

2. Schnellmontageelement nach Anspruch 1, **dadurch gekennzeichnet, dass** die Klebeverbindung (21) aus einem dauerelastischen Klebemittel (19), insbesondere einem Elastomerklebstoff, Schmelzklebstoff, Basispolymer oder harzbasierten Klebstoff oder Mischungen daraus gebildet ist.

3. Schnellmontageelement nach Anspruch 1 oder 2, **dadurch gekennzeichnet, dass** die Klebeverbindung (21) auf einer Hülseninnenseite (27) eines Hülsenmantels (14) und/oder einem Hülsenboden (13) der Hülse (10) vorgesehen ist.

4. Schnellmontageelement nach einem der vorhergehenden Ansprüche, **dadurch gekennzeichnet, dass** die Klebeverbindung (21) punktförmig, nach Art einer Linie oder flächig aufgetragen ist oder dass die Hülse (10) teil- oder vollflächig mit dem Klebemittel (19) verfüllt ist.

5. Schnellmontageelement nach einem der vorhergehenden Ansprüche, **dadurch gekennzeichnet**, däss die Klemmbacken (20) gegenüber einer Hülsenlängsachse (A) verschwenkbar, insbesondere in, im Wesentlichen, radialer und/oder axialer Richtung (A, B) in der Hülse (10) verschwenkbar angeordnet sind.

6. Schnellmontageelement nach einem der Ansprüche 3 bis 5, **dadurch gekennzeichnet, dass** an einem Übergang (34) von dem Hülsenboden (13) zum Hülsenmantel (14) ein Widerlagersattel (12) für die Klemmbacken (20) vorgesehen ist.

7. Schnellmontageelement nach einem der vorhergehenden Ansprüche, **dadurch gekennzeichnet, dass** die Hülse (10) ein sich radial von der Hülsenlängsachse (A) weg erstreckendes Stützelement (29) enthält.

8. Schnellmontageelement nach einem der vorhergehenden Ansprüche, **dadurch gekennzeichnet, dass** die Hülse (10) an ihrer Außenseite Haltestrukturen (32) zur form-, kraft- oder stoffschlüssigen Verbindung mit einem Bauteil (31) enthält.

9. Schnellmontageelement nach einem der vorhergehenden Ansprüche, **dadurch gekennzeichnet, dass** die Klemmbacken (20) wenigstens an einem zu einem Befestigungselement (30) gewandten Abschnitt (22) Haltestrukturen (23), insbesondere Gewindeausbildungen aufweisen, die mit dem Befestigungselement (30) in Eingriff bringbar, insbesondere verrastbar, sind.

10. Schnellmontageelement nach einem der Ansprüche 2 bis 9, **dadurch gekennzeichnet, dass** die Klemmbacken (20) durch das Klebemittel (19) vollständig abgedeckt sind.

11. Schnellmontageelement nach einem der vorhergehenden Ansprüche, **dadurch gekennzeichnet, dass** die Hülse (10) innerhalb einer weiteren äußeren Hülse (50) untergebracht und zwischen der Hülse (10) und der äußeren Hülse (50) mindestens ein Isolierelement (53) angeordnet ist.

12. Befestigungssystem mit einem Schnellmontagelement (1) nach einem der Ansprüche 1 bis 11 und einem mit den Klemmbacken (20) des Schnellmontageelements (1) verrastend in Eingriff bringbaren Befestigungselement (30), **dadurch gekennzeichnet, dass** das Befestigungselement (30) als ein in das Schnellmontageelement (1) einführbares Gewindeelement ausgebildet ist.

13. Befestigungssystem nach Anspruch 12, **dadurch gekennzeichnet, dass** zwischen dem Schnellmontageelement (1) und dem Befestigungselement (30) ein weiteres Isolierelement (58) und/oder Dämpfungselement (60) angeordnet ist.

14. Befestigungssystem nach Anspruch 13, **dadurch gekennzeichnet, dass** das Isolierelement (58) und/oder Dämpfungselement (60) zwischen einem Auflageteil (57) des Befestigungselements (30) und dem Schnellmontageelement (1) angeordnet ist.

15. Befestigungssystem nach Anspruch 13 oder 14, **dadurch gekennzeichnet, dass** das Dämpfungselement (60) aus einem innerhalb einer Umhüllung (63) angeordneten Kleb- oder Dichtstoff (62) besteht.

## Claims

1. Rapid assembly element with
- at least two clamping jaws (20) and
- a sleeve (10) enclosing the clamping jaws (20),
**characterised in that** a glued connection (21) is provided between the clamping jaws (20) and the sleeve (10) allowing the clamping jaws (20) to pivot.

2. Rapid assembly element according to claim 1, **characterised in that** the glued connection (21) is formed from a permanently elastic adhesive (19), in particular an elastomer adhesive, hot-melt type adhesive, basic polymer or resin-based adhesive or mixtures thereof.

3. Rapid assembly element according to claim 1 or 2, **characterised in that** the glued connection (21) is provided on a sleeve inside (27) of a sleeve casing (14) and/or a sleeve bottom (13) of the sleeve (10).

4. Rapid assembly element according to one of the preceding claims, **characterised in that** the adhesive connection (21) is applied in the form of a dot, in the form of a line or over an area or **in that** the sleeve (10) is partially or completely covered with the adhesive (19).

5. Rapid assembly element according to one of the preceding claims, **characterised in that** the clamping jaws (20) are arranged so as to be able to pivot in relation to a longitudinal axis (A) of the sleeve, in particular so as to be able to pivot in an essentially radial and/or axial direction (A, B) in the sleeve (10).

6. Rapid assembly element according to one of claims 3 to 5, **characterised in that** an abutment saddle (12) for the clamping jaws (20) is provided at a transition (34) from the sleeve bottom (13) to the sleeve casing (14).

7. Rapid assembly element according to one of the preceding claims, **characterised in that** the sleeve (10) comprises a supporting element (29) which extends radially away from the longitudinal axis (A) of the sleeve.

8. Rapid assembly element according to one of the preceding claims, **characterised in that** on its outside the sleeve (10) comprises holding structures (32) for form-locking, force-locking or intimate material connection with a component (31).

9. Rapid assembly element according to one of the preceding claims, **characterised in that** on at least one portion (22) facing a fastening element (30) the clamping jaws (20) has holding structures (23), in particular thread structures, which can be brought into engagement, in particular locked, with the fastening element (30).

10. Rapid assembly element according to one of claims 2 to 9, **characterised in that** the clamping jaws (20) are completely covered by the adhesive (19).

11. Rapid assembly element according to one of the preceding claims, **characterised in that** the sleeve (10) is housed inside a further outer sleeve (50) and **in that** at least one insulating element (53) is arranged between the sleeve (10) and the outer sleeve (50).

12. Fastening system with a rapid assembly element (1) according to one of claims 1 to 11 and with a fastening element (30) which can be brought into locking engagement with the clamping jaws (20) of the rapid assembly element (1), **characterised in that** the fastening element (30) is embodied in the form of a threaded element which can be introduced into the rapid assembly element (1).

13. Fastening system according to claim 12, **characterised in that** a further insulating element (58) and/or damping element (60) is arranged between the rapid assembly element (1) and the fastening element (30).

14. Fastening system according to claim 13, **characterised in that** the insulating element (58) and/or damping element (60) is arranged between a support part (57) of the fastening element (30) and the rapid assembly element (1).

15. Fastening system according to claim 13 or 14, **characterised in that** the damping element (60) consists of an adhesive or sealer (62) which is arranged inside a cover (63).

## Revendications

1. Elément de montage rapide comprenant :
- au moins deux mâchoires de serrage (20) et
- une douille (10) entourant les mâchoires de serrage (20),
**caractérisé en ce qu'**est prévu un système d'assemblage par collage (21) des mâchoires de serrage (20) et de la douille (10), permettant le pivotement des mâchoires de serrage (20).

2. Elément de montage rapide selon la revendication 1, **caractérisé en ce que** le système d'assemblage par collage (21) est obtenu à partir d'un adhésif (19) durablement élastique, en particulier à partir d'un adhésif élastomère, d'un adhésif thermofusible, d'un polymère de base ou d'un adhésif à base de résine ou des mélanges de ces derniers.

3. Elément de montage rapide selon la revendication 1 ou 2, **caractérisé en ce que** le système d'assemblage par collage (21) est prévu su un côté intérieur de douille (27) d'une gaine de douille (14) et/ou sur un fond de douille (13) de la douille (10).

4. Elément de montage rapide selon l'une quelconque des revendications précédentes, **caractérisé en ce que** le système d'assemblage par collage (21) est appliqué de manière ponctuelle, à la manière d'une ligne ou en surface, ou **en ce que** la douille (10) est remplie de l'adhésif (19) sur une partie ou sur la totalité de la surface.

5. Elément de montage rapide selon l'une quelconque des revendications précédentes, **caractérisé en ce que** les mâchoires de serrage (20) sont disposées de manière à pouvoir pivoter dans la douille (10) par rapport à un axe longitudinal de douille (A), en particulier dans une direction essentiellement radiale et/ou axiale (A, B).

6. Elément de montage rapide selon l'une quelconque des revendications 3 à 5, **caractérisé en ce qu'**une sellette de contre-palier (12) est prévue pour les mâchoires de serrage (20) au niveau d'un passage (34) allant du fond de douille (13) à la gaine de douille (14).

7. Elément de montage rapide selon l'une quelconque des revendications précédentes, **caractérisé en ce que** la douille (10) contient un élément de soutien (29) s'étendant de manière radiale de manière à s'éloigner de l'axe longitudinal de douille (A).

8. Elément de montage rapide selon l'une quelconque des revendications précédentes, **caractérisé en ce que** la douille (10) contient au niveau de son côté extérieur des structures de maintien (32) destinées à être assemblées par complémentarité de forme, à force ou par liaison de matière à un composant (31).

9. Elément de montage rapide selon l'une quelconque des revendications précédentes, **caractérisé en ce que** les mâchoires de serrage (20) présentent au moins au niveau d'une section (22) tournée en direction d'un élément de fixation (30) des structures de maintien (23), en particulier des réalisations filetées, qui peuvent être amenées en prise, en particulier être enclenchées, avec l'élément de fixation (30).

10. Elément de montage rapide selon l'une quelconque des revendications 2 à 9, **caractérisé en ce que** les mâchoires de serrage (20) sont totalement recouvertes par l'adhésif (19).

11. Elément de montage rapide selon l'une quelconque des revendications précédentes, **caractérisé en ce que** la douille (10) est abritée à l'intérieur d'une autre douille (50) extérieure, et **en ce qu'**au moins un élément isolant (53) est disposé entre la douille (10) et la douille (50) extérieure.

12. Système de fixation comprenant un élément de montage rapide (1) selon l'une quelconque des revendications 1 à 11 et comprenant un élément de fixation (30) pouvant être amené en prise, se manière à s'enclencher, avec les mâchoires de serrage (20) de l'élément de montage rapide (1), **caractérisé en ce que** l'élément de fixation (30) est réalisé sous la forme d'un élément fileté pouvant être introduit dans l'élément de montage rapide (1).

13. Système de fixation selon la revendication 12, **caractérisé en ce qu'**un autre élément isolant (58) et/ou un élément d'amortissement (60) sont disposés entre l'élément de montage rapide (1) et l'élément de fixation (30).

14. Système de fixation selon la revendication 13, **caractérisé en ce que** l'élément isolant (58) et/ou l'élément d'amortissement (60) sont disposés entre une partie de réception (57) de l'élément de fixation (30) et l'élément de montage rapide (1).

15. Système de fixation selon la revendication 13 ou 14, **caractérisé en ce que** l'élément d'amortissement (60) est constitué d'une colle ou d'une matière d'étanchéité (62) disposée à l'intérieur d'une enveloppe (63).
